# EUROPEAN PATENT APPLICATION

(11) **EP 4 351 035 A1**
(43) Date of publication of application: **10.04.2024**
(21) Application number: 22831224.5
(22) Date of filing: 08.03.2022
(51) Int. Cl.: H04B 10/032

(54) **OPTICAL CROSS-CONNECT DEVICE AND WAVELENGTH SELECTIVE SWITCH**

(30) Priority: 28.06.2021 CN 202110723058
(71) Applicant: Huawei Technologies Co., Ltd., Longgang Shenzhen, Guangdong 518129 (CN)
(72) Inventor: QI, Bin, Shenzhen, Guangdong 518129 (CN); XIE, Guang, Shenzhen, Guangdong 518129 (CN); HUANG, Jianmin, Shenzhen, Guangdong 518129 (CN)
(74) Representative: Huawei European IPR
(86) International application number: PCT/CN2022/079681
(87) International publication number: WO 2023/273393

(57) **Abstract**

Embodiments of this application disclose an optical cross-connect device, configured to establish a protection path based on an existing board, and automatically switch to the protection path after a working path is faulty. The optical cross-connect device in embodiments of this application includes: a first board, a second board, a third board, and an optical connecting module. The first board, the second board, and the third board are separately connected to the optical connecting module, and an optical path between the first board and the second board is a working path. If the working path is unavailable, the first board is configured to receive a target optical signal, and transmit the target optical signal to the third board through the optical connecting module. The third board is configured to receive the target optical signal sent by the first board, and transmit the target optical signal to the second board through the optical connecting module. The second board is configured to receive the target optical signal, and send the target optical signal in a direction of a line side.

## Description

This application claims priority to Chinese Patent Application No. 202110723058.9, filed with the China National Intellectual Property Administration on June 28, 2021 and entitled "ALL-OPTICAL CROSS-CONNECT DEVICE AND WAVELENGTH SELECTIVE SWITCH", which is incorporated herein by reference in its entirety.

### TECHNICAL FIELD

Embodiments of this application relate to the signal processing field, and in particular, to an all-optical cross-connect device and a wavelength selective switch.

### BACKGROUND

An all-optical cross-connect (optical cross connect, OXC) device is a new centralized optical cross-connect device. Service cross-connect of a large degree is scheduled through all-optical cross-connect instead of electrical cross-connect. This greatly shortens service transmission delay and facilitates service deployment.

In a current solution in which service cross-connect scheduling is performed through the all-optical cross-connect device, a plurality of OXC boards may be inserted into different slots of an OXC device, and optical signal connection between the different slots is implemented by using an all-optical backplane in the OXC device or a fiber connection box of a multi-channel pluggable optical connector (multi-fiber push on, MPO). An optical path component such as a fiber or an optical connector may be faulty sometimes. As a result, a working path between two OXC boards is faulty, and optical communication between the two OXC boards cannot be performed normally. Therefore, in an existing protection solution, the optical communication service is protected by adding a third OXC board. For example, if a working path between a first OXC board and a second OXC board is faulty, the first OXC board schedules an original service to the third OXC board, enables a third path between the first OXC board and the third OXC board, switches an optical fiber connected to the second OXC board to the third OXC board, and uses the third OXC board to replace the second OXC board to work, thereby implementing protection for an optical communication service.

In an existing optical communication service protection solution, to protect the optical communication service, the third OXC board needs to be pre-configured for an optical communication path of the service to provide a third path. More services need to be protected, and more third OXC boards are required. As a result, more OXC devices are occupied, costs of the OXC devices are increased, and effective utilization of the OXC devices is reduced. In addition, after a service is faulty, a fiber needs to be switched to the third OXC board, and remote switching or automatic switching cannot be performed. Consequently, a service interruption time is long, and service protection efficiency is low.

### SUMMARY

Embodiments of this application provide an all-optical cross-connect device and a wavelength selective switch, to establish a protection path based on an existing board, and automatically switch to the protection path after a working path is faulty.

A first aspect of embodiments of this application provides an optical cross-connect device, where the optical cross-connect device is configured to perform service cross-connect scheduling in an optical signal transmission network. After receiving a target optical signal sent by a first line side, the optical cross-connect device sends the target optical signal to a corresponding second line side. The optical cross-connect device includes: a first board, a second board, a third board, and an optical connecting module. The first board, the second board, and the third board are separately connected to the optical connecting module, and an optical path between the first board and the second board is a working path. If the working path is unavailable, the first board is configured to receive the target optical signal, and transmit the target optical signal to the third board through the optical connecting module based on an optical cross-connect configuration. The third board is configured to receive the target optical signal sent by the first board, and transmit the target optical signal to the second board through the optical connecting module based on the optical cross-connect configuration. The second board is configured to receive the target optical signal, and send the target optical signal in a direction of the line side.

In this possible implementation, the optical cross-connect device may establish a backup path on existing service boards such as the third board and a fourth board. A backup board is not specially preset for the working path, normal service work of a service board such as the third board is not affected, and a board slot of the optical cross-connect device is not additionally occupied. In addition, after the working path is faulty, the optical cross-connect device provided in embodiments of this application does not need to manually switch an optical fiber of the line side, and can automatically establish a protection path and switch an optical path based on the optical cross-connect configuration after the working path is faulty. An automatic cross-connect configuration enables remote automatic protection path selection for services, thereby greatly reducing a service interruption time. After the protection path is established in the present invention, the occurrence of long-term service faults can be greatly reduced, and the overall reliability of the optical cross-connect device is greatly improved with a proper dust-proof design of an optical connector.

In a possible implementation of the first aspect, the optical cross-connect device further includes: a fourth board, where the fourth board is connected to the optical connecting module. If the working path is unavailable and the optical path between the first board and the third board is also unavailable, the first board is configured to receive the target optical signal, and transmit the target optical signal to the fourth board through the optical connecting module based on the optical cross-connect configuration. The fourth board is configured to receive the target optical signal sent by the first board, and transmit the target optical signal to the second board through the optical connecting module based on the optical cross-connect configuration. The second board is configured to receive the target optical signal, and send the target optical signal in the direction of the line side.

In a possible implementation of the first aspect, the third board includes a third wavelength selective switch WSS. The third WSS includes a device-side input port, a device-side output port, a loopback unit, and an optical processing unit. The device-side input port, the device-side output port, and the loopback unit are separately connected to the optical processing unit. If the working path is unavailable, the device-side input port is configured to receive the target optical signal transmitted by the optical connecting module, and transmit the target optical signal to the optical processing unit. The optical processing unit is configured to receive the target optical signal transmitted by the device-side input port, and transmit the target optical signal to the loopback unit. The loopback unit is configured to receive the target optical signal transmitted by the optical processing unit, and transmit the target optical signal to the optical processing unit after performing loopback transmission of the target optical signal inside the loopback unit. The optical processing unit is further configured to receive the target optical signal transmitted by the loopback unit, and transmit the target optical signal to the device-side output port. The device-side output port is configured to receive the target optical signal transmitted by the optical processing unit, and transmit the target optical signal to the optical connecting module.

In a possible implementation of the first aspect, the loopback unit includes a first loopback port and a second loopback port, the first loopback port and the second loopback port are separately connected to the optical processing unit, and the first loopback port is connected to the second loopback port. The first loopback port is configured to receive the target optical signal transmitted by the optical processing unit, and transmit the target optical signal to the second loopback port. The second loopback port is configured to receive the target optical signal transmitted by the first loopback port, and transmit the target optical signal to the optical processing unit.

In a possible implementation of the first aspect, the loopback unit further includes a first optical amplifier, where the first loopback port, the first optical amplifier, and the second loopback port are sequentially connected. The first optical amplifier is configured to receive the target optical signal transmitted by the first loopback port, amplify the target optical signal, and then transmit the target optical signal to the second loopback port.

In a possible implementation of the first aspect, the optical processing unit includes a liquid crystal on silicon unit. The liquid crystal on silicon unit is configured to, if the working path is unavailable, adjust a transmission direction of the target optical signal in the optical processing unit, so that the optical processing unit transmits the target optical signal to the first loopback port.

In a possible implementation of the first aspect, the device-side output port includes a plurality of optical fiber interfaces. The liquid crystal on silicon unit is further configured to, if the working path is unavailable, adjust the transmission direction of the target optical signal in the optical processing unit, so that the optical processing unit transmits the target optical signal to a target optical fiber interface, where the target optical fiber interface is an optical fiber interface that is of the device-side output port and that corresponds to the second board.

A second aspect of embodiments of this application provides a wavelength selective switch WSS. The WSS includes a device-side input port, a device-side output port, a loopback unit, and an optical processing unit. The device-side input port, the device-side output port, and the loopback unit are separately connected to the optical processing unit. If a target optical signal indicates the WSS to transmit the target optical signal to a target WSS, the device-side input port is configured to receive the target optical signal transmitted by an optical connecting module, and transmit the target optical signal to the optical processing unit, where the target WSS is a WSS corresponding to the target optical signal. The optical processing unit is configured to receive the target optical signal transmitted by the device-side input port, and transmit the target optical signal to the loopback unit. The loopback unit is configured to receive the target optical signal transmitted by the optical processing unit, and transmit the target optical signal to the optical processing unit after performing loopback transmission of the target optical signal inside the loopback unit. The optical processing unit is further configured to receive the target optical signal transmitted by the loopback unit, and transmit the target optical signal to the device-side output port. The device-side output port is configured to receive the target optical signal transmitted by the optical processing unit, and transmit the target optical signal to the target WSS through an optical connecting module based on an optical cross-connect configuration.

According to the foregoing technical solutions, it can be learned that embodiments of this application have the following advantages.

In embodiments of this application, the loopback unit is added to the WSS in the board, so that the optical cross-connect device can establish a backup path on existing service boards such as the third board and the fourth board. A backup board is not specially preset for the working path, normal service work of a service board such as the third board is not affected, and a board slot of the optical cross-connect device is not additionally occupied. In addition, after the working path is faulty, the optical cross-connect device provided in embodiments of this application does not need to manually switch an optical fiber of the line side, and can automatically establish a protection path and switch an optical path based on the optical cross-connect configuration after the working path is faulty. An automatic cross-connect configuration enables remote automatic protection path selection for services, thereby greatly reducing a service interruption time. After the protection path is established in the present invention, the occurrence of long-term service faults can be greatly reduced, and the overall reliability of the optical cross-connect device is greatly improved with a proper dust-proof design of an optical connector.

### BRIEF DESCRIPTION OF DRAWINGS

FIG. 1 is a schematic diagram of a structure of an optical cross-connect device;
FIG. 2 is a schematic diagram of a structure of an optical cross-connect device according to an embodiment of this application;
FIG. 3 is a schematic diagram of another structure of an optical cross-connect device according to an embodiment of this application;
FIG. 4 is a schematic diagram of another structure of an optical cross-connect device according to an embodiment of this application;
FIG. 5 is a schematic diagram of a structure of a wavelength selective switch according to an embodiment of this application; and
FIG. 6 is a schematic diagram of a structure of a wavelength selective switch according to an embodiment of this application.

### DESCRIPTION OF EMBODIMENTS

Embodiments of this application provide an all-optical cross-connect device and a wavelength selective switch, to establish a protection path based on an existing board, and automatically switch to the protection path after a working path is faulty.

The following describes embodiments of this application with reference to accompanying drawings. It is clear that the described embodiments are merely some but not all of embodiments of this application. A person of ordinary skill in the art may learn that technical solutions provided in embodiments of this application are also applicable to a similar technical problem as a technology develops and a new scenario emerges.

In the specification, claims, and the accompanying drawings of this application, the terms "first", "second", and so on are intended to distinguish between similar objects but do not necessarily indicate a specific order or sequence. It should be understood that the data termed in such a way is interchangeable in proper circumstances so that embodiments described herein can be implemented in other orders than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

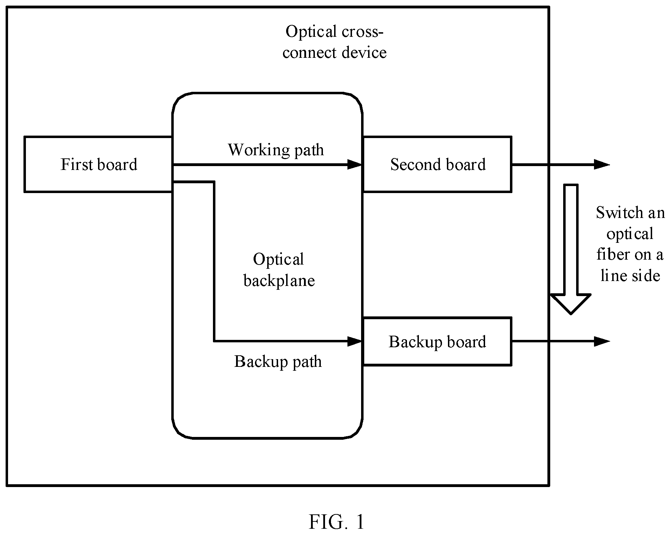

Refer to FIG. 1. An all-optical cross-connect (optical cross connect, OXC) device is a new centralized optical cross-connect device. Service cross-connect of a large degree is scheduled through optical cross-connect instead of electrical cross-connect. This greatly shortens service transmission delay and facilitates service deployment. In a current solution in which service cross-connect scheduling is performed through an all-optical cross-connect device, a plurality of boards may be inserted into different slots of an OXC device, and optical signal connection between the different slots is implemented by using an all-optical backplane in the OXC device or a fiber connection box of a multi-channel pluggable optical connector (multi-fiber push on, MPO). An optical path component such as a fiber or an optical connector may be faulty sometimes. As a result, a working path between two boards is faulty, and optical communication between the two boards cannot be performed normally. Therefore, in an existing protection solution, the optical communication service is protected by adding a backup board. For example, if a working path between a first board and a second board is faulty, the first board schedules an original service to the backup board, enables a protection path between the first board and the backup board, switches an optical fiber on a line side connected to the second board to the backup board, and uses the backup board to replace the second board to work, thereby implementing protection for an optical communication service.

In an existing optical communication service protection solution, to protect the optical communication service, the backup board needs to be pre-configured for an optical communication path of the service to provide a protection path. More services need to be protected, and more backup boards are required. As a result, more OXC devices are occupied, costs of the OXC devices are increased, and effective utilization of the OXC devices is reduced. In addition, after a service is faulty, a fiber on the line side needs to be switched to the backup board, and remote switching or automatic switching cannot be performed. Consequently, a service interruption time is long, and service protection efficiency is low.

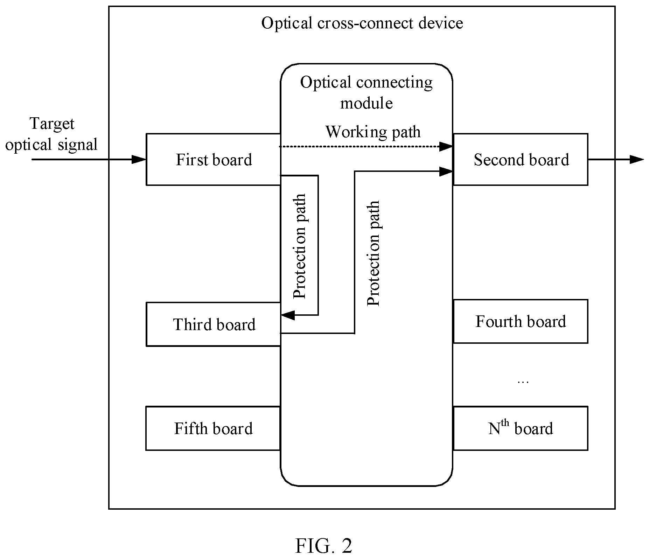

Refer to FIG. 2. An embodiment of this application provides an optical cross-connect device. The optical cross-connect device may be used for a reconfigurable optical add/drop multiplexer (reconfigurable optical add/drop multiplexer, ROADM). The optical cross-connect device includes an optical connecting module and a plurality of boards. The plurality of boards are separately connected to an optical connecting module, and the plurality of boards may be connected to the optical connecting module through an optical connector. A plurality of optical fibers are built in the optical connecting module. The plurality of optical fibers are configured for optical signal transmission between the plurality of boards, so that non-blocking interconnection of services can be implemented between any two boards, that is, optical signals can be transmitted between any two boards. A wavelength selective switch (wavelength selective switching, WSS) of at least one board in the optical cross-connect device in this application includes a loopback unit. The loopback unit enables the at least one board to receive an optical signal sent by the optical connecting module, and transmit the optical signal to the optical connecting module after loopback in the at least one board, so that the at least one board has a capability of establishing a protection path. After the optical cross-connect device in this embodiment of this application receives a target optical signal that needs to be transmitted from a first board to a second board, if a preset working path for the target optical signal is unavailable, that is, when optical paths preset for the first board and the second board in the optical cross-connect device are unavailable, the optical cross-connect device adjusts an optical cross-connect configuration, so that the first board transmits the target optical signal to a third board, and then the third board sends the target optical signal to the second board after loopback in the third board through an internal loopback unit, and the service corresponding to the target optical signal is protected through the third board.

If the working path in the optical cross-connect device provided in this embodiment of this application is faulty, the target optical signal can be transmitted to the second board through another board that executes another service. A backup board is not specially preset for the working path, and normal service work of a service board such as the third board is not affected. In addition, after the working path is faulty, the optical cross-connect device provided in embodiments of this application does not need to manually switch an optical fiber of the line side, and can automatically establish a protection path and switch an optical path after the working path is faulty.

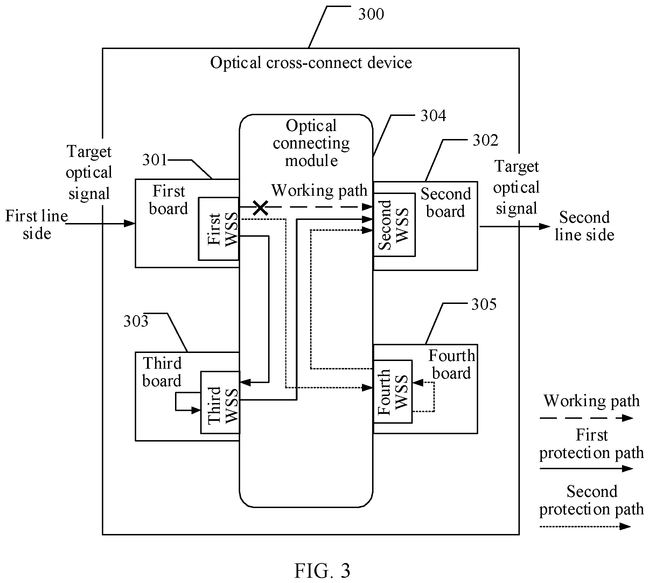

Refer to FIG. 3. An embodiment of this application provides an optical cross-connect device 300. The optical cross-connect device 300 includes: a first board 301, a second board 302, a third board 303, and an optical connecting module 304. The first board 301, the second board 302, and the third board 303 are separately connected to the optical connecting module 304.

The first board 301 is configured to receive a target optical signal from a corresponding first line side, where the target optical signal indicates that the target optical signal needs to be transmitted to the second board 302, and then is transmitted to a second line side corresponding to the second board 302 through the second board 302. After the first board 301 receives the target optical signal, if a working path between the first board 301 and the second board 302 is unavailable, the first board 301 transmits the target optical signal to the third board 303 through the optical connecting module based on an optical cross-connect configuration of the optical cross-connect device.

Specifically, if the working path between the first board 301 and the second board 302 is unavailable, and the optical cross-connect device 300 determines that the optical path between the first board 301 and the third board 303 and an optical path between the third board 303 and the second board 302 are available, the optical cross-connect device 300 transmits the target optical signal to the third board 303 through the optical path between the first board 301 and the third board 303 in the optical connecting module 304 by adjusting the optical cross-connect configuration, so that after the third board 303 receives the target optical signal, the third board 303 may transmit the target optical signal to the second board 302 through the optical path between the third board 303 and the second board 302 in the optical connecting module 304. The optical path between the first board 301 and the third board 303 in the optical connecting module 304 and the optical path between the third board 303 and the second board 302 are a first protection path, and the first protection path is a protection path built by the working path in the optical cross-connect device 300.

When the working path is unavailable, the first board 301 transmits the target optical signal to the third board 303 through the optical connecting module 304. In this case, no other optical signal needs to be transmitted between the third board 303 and the first board 301. In addition, in this case, that the first board 301 transmits the target optical signal to the third board 303 through the optical connecting module 304 does not affect a normal service of the third board 303, that is, transmission of an optical signal, and the third board may still transmit an optical signal with another board, or may not transmit an optical signal.

In a possible implementation, if the working path is available, the first board 301 transmits the target optical signal to the second board 302 through the working path.

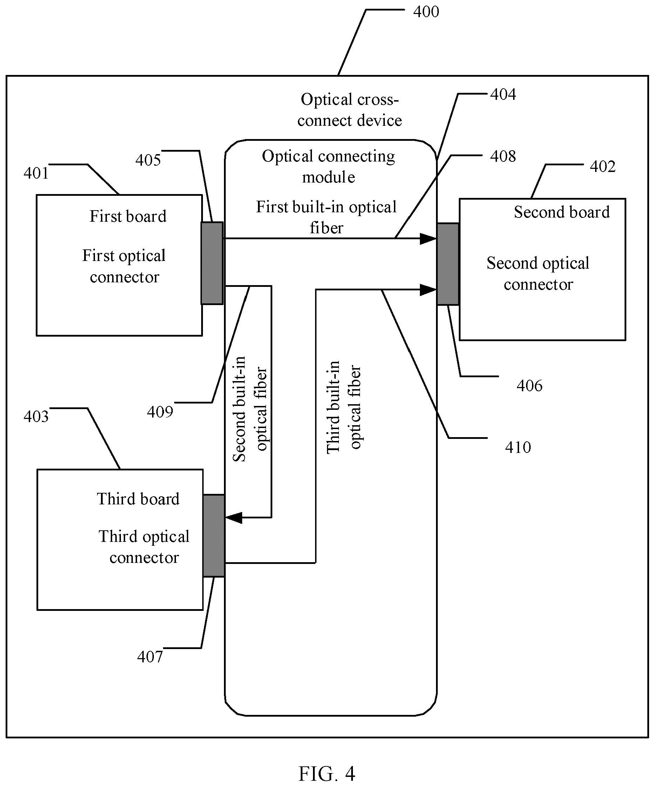

Refer to FIG. 4. The working path refers to an optical path preset for a first board 401 and a second board 402 in an optical cross-connect device 400, for optical signal transmission between the first board 401 and the second board 402. The working path includes a first optical connector 405, a second optical connector 406, and a first built-in optical fiber 408. The first optical connector 405 is configured for optical signal transmission between the first board 401 and the optical connecting module 404, the second optical connector 406 is configured for optical signal transmission between the second board 402 and the optical connecting module 404, and the first built-in optical fiber 408 is an optical fiber preset for the first board 401 and the second board 402 in the optical connecting module 404, for optical signal transmission between the first board 401 and the second board 402. When the working path is unavailable, and a second built-in optical fiber 409 and a third built-in optical fiber 410 are available, that is, when no optical signal needs to be transmitted between the first board 401 and the third board 403, and no optical signal needs to be transmitted between the third board 403 and the second board 402, the first board 401 transmits the target optical signal to the third board 303 through the second built-in optical fiber 409 in the optical connecting module 304 based on an optical cross-connect configuration of the optical cross-connect device 400. The optical cross-connect configuration is a transmission configuration set by the optical cross-connect device 400 for transmission of the target optical signal. Changing the configuration may change a transmission optical path of the target optical signal in the optical cross-connect device 400.

When the foregoing working path is unavailable, at least one of the first optical connector 405, the second optical connector 406, and the first built-in optical fiber 408 may be faulty. For example, the first built-in optical fiber 408 is broken, or the first optical connector 405 is dirty or burnt, or the second optical connector 406 is dirty or burnt. This is not specifically limited herein. In addition, when the working path is unavailable, the optical cross-connect device 400 may detect that the working path is unavailable before or after receiving the target optical signal, or may detect that the working path is unavailable during transmission of the target optical signal in the working path. This is not specifically limited herein.

Refer to FIG. 3. The third board 303 is configured to receive the target optical signal sent by the first board 301 through the optical connecting module 304, and then transmit the target optical signal to the second board 302 through the optical connecting module 304. Specifically, after the third board 303 receives the target optical signal transmitted by the first board 301 through the optical connecting module 304, the third board 303 loops back the target optical signal inside the third board 303, and then transmits the target optical signal to the second board through the optical connecting module 304, to establish the first protection path for the service corresponding to the target optical signal.

Specifically, refer to FIG. 4. The third board 403 is configured to receive the target optical signal transmitted by the second built-in optical fiber 409 in the optical connecting module 404, and the third board 403 transmits the target optical signal to the third built-in optical fiber 410 in the optical connecting module 404 based on the optical cross-connect configuration of the optical cross-connect device 400. The third built-in optical fiber 410 is an optical fiber preset for the third board 403 and the second board 402 in the optical connecting module 404, for optical signal transmission between the third board 403 and the second board 402. Therefore, the third board 403 may transmit the target optical signal to the second board 402 through the third built-in optical fiber 410.

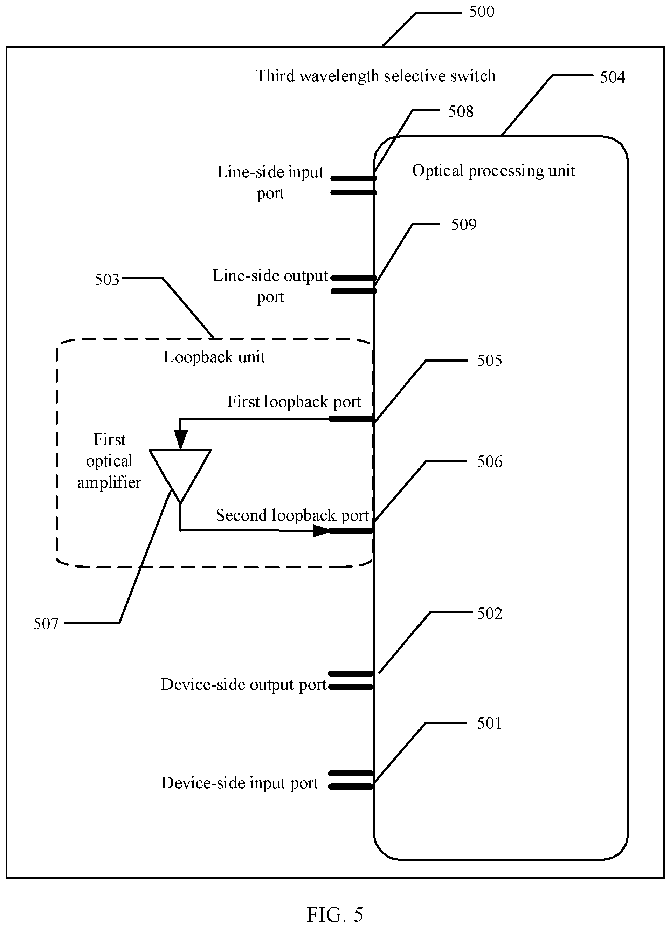

Specifically, for loopback of the target optical signal in the third board, refer to FIG. 5. The third board includes a third wavelength selective switch WSS 500, and the loopback of the target optical signal in the third board is that the third WSS 500 receives the target optical signal, loops back the target optical signal inside the third WSS 500, and then transmits the target optical signal to the optical connecting module. The third WSS 500 includes a device-side input port 501, a device-side output port 502, a loopback unit 503, and an optical processing unit 504, where the device-side input port 501, the device-side output port 502, and the loopback unit 503 are separately connected to the optical processing unit 504.

The device-side input port 501 is configured to receive the target optical signal transmitted by an optical connecting module, and transmit the target optical signal to the optical processing unit 504. The device-side input port 501 is a port that is in the third WSS 500 and that is configured to receive the target optical signal transmitted by the optical connecting module.

The optical processing unit 504 is configured to receive the target optical signal transmitted by the device-side input port 501. If the working path is unavailable, the optical processing unit 504 transmits the target optical signal to the loopback unit 503, then receives the target optical signal transmitted back from the loopback unit 503, and transmits the target optical signal to the device-side output port 502.

The loopback unit 503 is configured to receive the target optical signal transmitted by the optical processing unit 504, and transmit the target optical signal back to the optical processing unit 504 after performing loopback transmission of the target optical signal inside the loopback unit 503.

Specifically, the loopback unit 503 includes a first loopback port 505 and a second loopback port 506, the first loopback port 505 and the second loopback port 506 are separately connected to the optical processing unit 504, and the first loopback port 505 is connected to the second loopback port 506. The first loopback port 505 is configured to receive the target optical signal transmitted by the optical processing unit 504, and transmit the target optical signal to the second loopback port 506. The second loopback port 506 is configured to receive the target optical signal transmitted by the first loopback port, and transmit the target optical signal to the optical processing unit. The loopback unit 503 specifically completes internal loopback of the target optical signal by transmitting the target optical signal through the first loopback port 505 and the second loopback port 506.

In a possible implementation, the loopback unit 503 further includes a first optical amplifier (erbium-doped fiber amplifier, EDFA) 507, where the first loopback port 505, the first optical amplifier 507, and the second loopback port 506 are sequentially connected. The first optical amplifier 507 is configured to receive the target optical signal transmitted by the first loopback port, amplify the target optical signal, and then transmit the target optical signal to the second loopback port. A function of the first optical amplifier 507 is to cancel an insertion loss of the third WSS for the target optical signal, and an optical amplifier gain Gain of the first optical amplifier 507 is equal to an insertion loss of a wavelength selective switch (insertion loss wss, ILwss).

In a possible implementation, the third WSS 500 further includes a line-side input port 508 and a line-side output port 509, and the line-side input port 508 and the line-side output port 509 are separately connected to the optical processing unit.

The line-side input port 508 is configured to receive an optical signal transmitted on the line side, and transmit the optical signal to the optical processing unit.

The line-side output port 509 is configured to receive the optical signal transmitted by the optical processing unit, and transmit the optical signal to the line side.

The device-side output port 502 is configured to receive the target optical signal transmitted by the optical processing unit 504, and transmit the target optical signal to the optical connecting module. Specifically, the device-side output port 502 includes a plurality of optical fiber interfaces. When the device-side output port 502 receives the target optical signal transmitted by the optical processing unit, the device-side output port 502 transmits the target optical signal to the optical connecting module, so that the optical connecting module transmits the target optical signal to the second board.

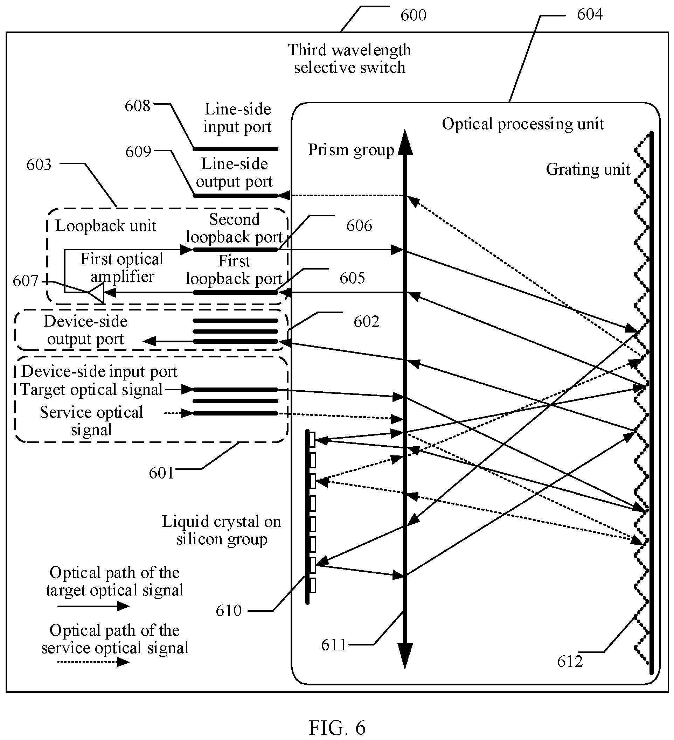

Specifically, for transmission of the target optical signal by the optical processing unit, refer to FIG. 6, the third WSS 600 includes a device-side input port 601, a device-side output port 602, a loopback unit 603, and an optical processing unit 604. The device-side input port 601, the device-side output port 602, and the loopback unit 603 are separately connected to the optical processing unit 604. The optical processing unit 604 includes a liquid crystal on silicon unit 610, a prism group 611, and a grating unit 612.

The prism group 611 is configured to receive the target optical signal transmitted by the device-side input port 601, and after performing processing such as collimation, splitting, reflection, and refraction on the target optical signal, transmit the processed target optical signal to the grating unit 612. The prism group 611 is further configured to receive the target optical signal transmitted by the loopback unit 603, and transmit the target optical signal looped back by the loopback unit 603 to the liquid crystal on silicon unit 610 through the grating unit 612.

The grating unit 612 is configured to receive the target optical signal processed by the prism group 611, and after diffracting the target optical signal, the grating unit 612 reflects the target optical signal to the liquid crystal on silicon unit 610 through the prism group 611.

The liquid crystal on silicon unit 610 is configured to receive the target optical signal reflected by the prism group 611, and adjust an angle of the liquid crystal on silicon unit 610 based on the optical cross-connect configuration, so that the target optical signal is transmitted to the loopback unit 603 through the prism group 611 and the grating unit 612. The liquid crystal on silicon unit 610 is further configured to receive the target optical signal looped back by the loopback unit 603, and adjust an angle of the liquid crystal on silicon unit 610 based on the optical cross-connect configuration, so that the target optical signal is transmitted to the device-side output port 602 through the prism group 611 and the grating unit 612.

The third WSS 600 adjusts an angle of the liquid crystal on silicon unit 610 based on the optical cross-connect configuration, so that the target optical signal that is incident from the device-side input port 601 is processed through processing such as refraction, reflection, and diffraction of the liquid crystal on silicon unit 610, the prism group 611, and the grating unit 612, and is emitted from the device-side output port 602, to complete loopback of the target optical signal in the third WSS.

The second board 302 is configured to receive the target optical signal, and send the target optical signal in a direction of the second line side. Specifically, the second board is configured to receive the target optical signal sent by the optical connecting module, and send the target optical signal in a direction of the line side.

In a possible implementation, the optical cross-connect device 300 further includes a fourth board 305, where the fourth board 305 is connected to the optical connecting module 304.

If the working path is unavailable, and the optical path between the first board and the third board 303 is also unavailable, the first board 301 is configured to receive the target optical signal, and transmit the target optical signal to the fourth board 305 through the optical connecting module 304. Correspondingly, the fourth board 305 receives the target optical signal sent by the first board 301, and transmits the target optical signal to the second board 302 through the optical connecting module 304, to establish a second protection path for a service corresponding to the target optical signal. A manner in which the fourth board 305 processes the target optical signal is similar to a manner in which the third board 303 processes the target optical signal. For details, refer to the description of the third board 303. Details are not described herein again.

The optical connecting module 304 is configured to transmit an optical signal between any two boards of the first board 301, the second board 302, the third board 303, and the fourth board 305 in the optical cross-connect device 300. A plurality of optical fibers are built in the optical connecting module 304, and the plurality of optical fibers are configured for optical signal transmission between the plurality of boards, so that a non-blocking service interconnection can be implemented between any two boards, that is, an optical signal can be transmitted between any two boards.

In this embodiment of this application, the optical connecting module 304 may be an optical backplane in which the plurality of fibers are built, or may be a fiber connection box of a multi-channel pluggable optical connector (multi-fiber push on, MPO) in which a plurality of fibers are built. This embodiment of this application is further applicable to a conventional ROADM system. Therefore, the optical connecting module 304 may also be an optical backplane or an MPO fiber connection box that includes a plurality of fiber patch cords. This is not specifically limited herein.

In this embodiment of this application, as shown in FIG. 6, the third WSS includes the device-side input port 601, the device-side output port 602, the first loopback port 605, the second loopback port 606, the line-side input port 608, and the line-side output port 609. Any port may include an optical fiber array. The optical fiber array is an external optical fiber interface of an optical signal. All optical signals that need to be scheduled and processed need to be input or output through an optical fiber. Optical fibers are densely distributed and arranged in an array.

The optical cross-connect device in this embodiment of this application is configured to perform service cross-connect scheduling in an optical signal transmission network. After receiving optical signals from a plurality of line sides, the optical cross-connect device may send the plurality of line-side optical signals to a corresponding line side.

In this embodiment of this application, the optical cross-connect device 300 includes the first board 301, the second board 302, the third board 303, and the fourth board 305. In addition, the optical cross-connect device 300 may further include more newly added boards. As long as the newly added boards include a loopback unit similar to the third board 303 and the fourth board 305, the newly added boards may receive, similar to the third board 303 and the fourth board 305, the target optical signal sent by the first board 301, then, the target optical signal is transmitted to the second board 302, and a protection path is established for a service corresponding to the target optical signal, which is not specifically limited herein.

In embodiments of this application, the loopback unit is added to the WSS in the board, so that the optical cross-connect device can establish a backup path on existing service boards such as the third board and the fourth board. A backup board is not specially preset for the working path, normal service work of a service board such as the third board is not affected, and a board slot of the optical cross-connect device is not additionally occupied. In addition, after the working path is faulty, the optical cross-connect device provided in embodiments of this application does not need to manually switch an optical fiber of the line side, and can automatically establish a protection path and switch an optical path based on the optical cross-connect configuration after the working path is faulty. An automatic cross-connect configuration enables remote automatic protection path selection for services, thereby greatly reducing a service interruption time. After the protection path is established in the present invention, the occurrence of long-term service faults can be greatly reduced, and the overall reliability of the optical cross-connect device is greatly improved with a proper dust-proof design of an optical connector.

Refer to FIG. 5. An embodiment of this application provides a wavelength selective switch 500. The wavelength selective switch WSS 500 includes a device-side input port 501, a device-side output port 502, a loopback unit 503, and an optical processing unit 504. The device-side input port 501, the device-side output port 502, and the loopback unit 503 are separately connected to the optical processing unit 504.

The device-side input port 501 is configured to receive the target optical signal transmitted by an optical connecting module, and transmit the target optical signal to the optical processing unit 504. The device-side input port 501 is a port that is in the WSS 500 and that is configured to receive the target optical signal transmitted by the optical connecting module.

The optical processing unit 504 is configured to receive the target optical signal transmitted by the device-side input port 501, and if the working path is unavailable, transmit the target optical signal to the loopback unit 503, then receive the target optical signal transmitted by the loopback unit 503, and transmit the target optical signal to the device-side output port 502.

Specifically, as shown in FIG. 6, the optical processing unit 604 includes a liquid crystal on silicon unit 610, a prism group 611, and a grating unit 612. The prism group 611 is configured to receive the target optical signal transmitted by the device-side input port 601, and after performing processing such as collimation, splitting, reflection, and refraction on the target optical signal, transmit the processed target optical signal to the grating unit 612. The prism group 611 is further configured to receive the target optical signal transmitted by the loopback unit 603, and transmit the target optical signal looped back by the loopback unit 603 to the liquid crystal on silicon unit 610 through the grating unit 612.

The grating unit 612 is configured to receive the target optical signal processed by the prism group 611, and after diffracting the target optical signal, the grating unit 612 reflects the target optical signal to the liquid crystal on silicon unit 610 through the prism group 611.

The liquid crystal on silicon unit 610 is configured to receive the target optical signal reflected by the prism group 611, and adjust an angle of the liquid crystal on silicon unit 610 based on the optical cross-connect configuration, so that the target optical signal is transmitted to the loopback unit 603 through the prism group 611 and the grating unit 612. The liquid crystal on silicon unit 610 is further configured to receive the target optical signal looped back by the loopback unit 603, and adjust an angle of the liquid crystal on silicon unit 610 based on the optical cross-connect configuration, so that the target optical signal is transmitted to the device-side output port 602 through the prism group 611 and the grating unit 612.

The WSS 600 adjusts an angle of the liquid crystal on silicon unit 610 based on an optical cross-connect configuration, so that the target optical signal that is incident from the device-side input port 601 is processed through processing such as refraction, reflection, and diffraction of the liquid crystal on silicon unit 610, the prism group 611, and the grating unit 612, and is emitted from the device-side output port 602, to complete loopback of the target optical signal in the WSS.

The loopback unit 603 is configured to receive the target optical signal transmitted by the optical processing unit 604, and transmit the target optical signal back to the optical processing unit 604 after performing loopback transmission of the target optical signal inside the loopback unit 603.

Specifically, the loopback unit 503 includes a first loopback port 505 and a second loopback port 506, the first loopback port 505 and the second loopback port 506 are separately connected to the optical processing unit 504, and the first loopback port 505 is connected to the second loopback port 506. The first loopback port 505 is configured to receive the target optical signal transmitted by the optical processing unit 504, and transmit the target optical signal to the second loopback port 506. The second loopback port 506 is configured to receive the target optical signal transmitted by the first loopback port, and transmit the target optical signal to the optical processing unit. The loopback unit 503 specifically completes internal loopback of the target optical signal by transmitting the target optical signal through the first loopback port 505 and the second loopback port 506.

In a possible implementation, the loopback unit 503 further includes a first optical amplifier 507, where the first loopback port 505, the first optical amplifier 507, and the second loopback port 506 are sequentially connected. The first optical amplifier 507 is configured to receive the target optical signal transmitted by the first loopback port, amplify the target optical signal, and then transmit the target optical signal to the second loopback port.

In a possible implementation, the WSS 500 further includes the line-side input port 508 and the line-side output port 509, and the line-side input port 508 and the line-side output port 509 are separately connected to the optical processing unit.

The line-side input port 508 is configured to receive an optical signal transmitted on the line side, and transmit the optical signal to the optical processing unit.

The line-side output port 509 is configured to receive the optical signal transmitted by the optical processing unit, and transmit the optical signal to the line side.

The device-side output port 502 is configured to receive the target optical signal transmitted by the optical processing unit 504, and transmit the target optical signal to the optical connecting module. Specifically, the device-side output port 502 includes a plurality of optical fiber interfaces. When the device-side output port 502 receives the target optical signal transmitted by the optical processing unit, the device-side output port 502 transmits the target optical signal to the optical connecting module, so that the optical connecting module transmits the target optical signal to the second board.

In this embodiment of this application, as shown in FIG. 6, the WSS includes the device-side input port 601, the device-side output port 602, the first loopback port 605, the second loopback port 606, the line-side input port 608, and the line-side output port 609. Any port may include an optical fiber array. The optical fiber array is an external optical fiber interface of an optical signal. All optical signals that need to be scheduled and processed need to be input or output through an optical fiber. Optical fibers are densely distributed and arranged in an array.

In embodiments of this application, the loopback unit is added to the WSS in the board, so that the optical cross-connect device can establish a backup path on existing service boards such as the third board and the fourth board. A backup board is not specially preset for the working path, normal service work of a service board such as the third board is not affected, and a board slot of the optical cross-connect device is not additionally occupied. In addition, after the working path is faulty, the optical cross-connect device provided in embodiments of this application does not need to manually switch an optical fiber of the line side, and can automatically establish a protection path and switch an optical path based on the optical cross-connect configuration after the working path is faulty. An automatic cross-connect configuration enables remote automatic protection path selection for services, thereby greatly reducing a service interruption time. After the protection path is established in the present invention, the occurrence of long-term service faults can be greatly reduced, and the overall reliability of the optical cross-connect device is greatly improved with a proper dust-proof design of an optical connector.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

## Claims

1. An optical cross-connect device, wherein the optical cross-connect device comprises:
a first board, a second board, a third board, and an optical connecting module, wherein the first board, the second board, and the third board are separately connected to the optical connecting module, and an optical path between the first board and the second board is a working path;
if the working path is unavailable, the first board is configured to receive a target optical signal, and transmit the target optical signal to the third board through the optical connecting module based on an optical cross-connect configuration;
the third board is configured to receive the target optical signal sent by the first board, and transmit the target optical signal to the second board through the optical connecting module based on the optical cross-connect configuration; and
the second board is configured to receive the target optical signal, and send the target optical signal in a direction of a line side.

2. The optical cross-connect device according to claim 1, wherein the optical cross-connect device further comprises:
a fourth board, wherein the fourth board is connected to the optical connecting module;
if the working path is unavailable and an optical path between the first board and the third board is also unavailable, the first board is configured to receive the target optical signal, and transmit the target optical signal to the fourth board through the optical connecting module based on the optical cross-connect configuration;
the fourth board is configured to receive the target optical signal sent by the first board, and transmit the target optical signal to the second board through the optical connecting module based on the optical cross-connect configuration; and
the second board is configured to receive the target optical signal, and send the target optical signal in the direction of the line side.

3. The optical cross-connect device according to claim 1 or 2, wherein the third board comprises a third wavelength selective switch WSS, the third WSS comprises a device-side input port, a device-side output port, a loopback unit, and an optical processing unit, and the device-side input port, the device-side output port, and the loopback unit are separately connected to the optical processing unit;
if the working path is unavailable, the device-side input port is configured to receive the target optical signal transmitted by the optical connecting module, and transmit the target optical signal to the optical processing unit;
the optical processing unit is configured to receive the target optical signal transmitted by the device-side input port, and transmit the target optical signal to the loopback unit;
the loopback unit is configured to receive the target optical signal transmitted by the optical processing unit, and transmit the target optical signal to the optical processing unit after performing loopback transmission of the target optical signal inside the loopback unit;
the optical processing unit is further configured to receive the target optical signal transmitted by the loopback unit, and transmit the target optical signal to the device-side output port; and
the device-side output port is configured to receive the target optical signal transmitted by the optical processing unit, and transmit the target optical signal to the optical connecting module.

4. The optical cross-connect device according to claim 3, wherein the loopback unit comprises a first loopback port and a second loopback port, the first loopback port and the second loopback port are separately connected to the optical processing unit, and the first loopback port is connected to the second loopback port;
the first loopback port is configured to receive the target optical signal transmitted by the optical processing unit, and transmit the target optical signal to the second loopback port; and
the second loopback port is configured to receive the target optical signal transmitted by the first loopback port, and transmit the target optical signal to the optical processing unit.

5. The optical cross-connect device according to claim 4, wherein the loopback unit further comprises a first optical amplifier, and the first loopback port, the first optical amplifier, and the second loopback port are sequentially connected; and
the first optical amplifier is configured to receive the target optical signal transmitted by the first loopback port, amplify the target optical signal, and then transmit the target optical signal to the second loopback port.

6. The optical cross-connect device according to any one of claims 1 to 5, wherein the optical processing unit comprises a liquid crystal on silicon unit, and the liquid crystal on silicon unit is configured to:
adjust a transmission direction of the target optical signal in the optical processing unit if the working path is unavailable, to enable the optical processing unit to transmit the target optical signal to the first loopback port.

7. The optical cross-connect device according to claim 6, wherein the device-side output port comprises a plurality of optical fiber interfaces, and the liquid crystal on silicon unit is further configured to:
adjust the transmission direction of the target optical signal in the optical processing unit if the working path is unavailable, to enable the optical processing unit to transmit the target optical signal to a target optical fiber interface, wherein the target optical fiber interface is an optical fiber interface that is of the device-side output port and that corresponds to the second board.

8. A wavelength selective switch WSS, wherein the WSS comprises a device-side input port, a device-side output port, a loopback unit, and an optical processing unit, and the device-side input port, the device-side output port, and the loopback unit are separately connected to the optical processing unit;
if a target optical signal indicates the WSS to transmit the target optical signal to a target WSS, the device-side input port is configured to receive the target optical signal transmitted by an optical connecting module, and transmit the target optical signal to the optical processing unit, wherein the target WSS is a WSS corresponding to the target optical signal;
the optical processing unit is configured to receive the target optical signal transmitted by the device-side input port, and transmit the target optical signal to the loopback unit;
the loopback unit is configured to receive the target optical signal transmitted by the optical processing unit, and transmit the target optical signal to the optical processing unit after performing loopback transmission of the target optical signal inside the loopback unit;
the optical processing unit is further configured to receive the target optical signal transmitted by the loopback unit, and transmit the target optical signal to the device-side output port; and
the device-side output port is configured to receive the target optical signal transmitted by the optical processing unit, and transmit the target optical signal to the target WSS through the optical connecting module based on an optical cross-connect configuration.

9. An optical cross-connect method, applied to an optical cross-connect device, wherein the optical cross-connect device comprises a first board, a second board, a third board, and an optical connecting module; the first board, the second board, and the third board are separately connected to the optical connecting module, an optical path between the first board and the second board is a working path, and the method comprises:
receiving, if the working path is unavailable, a target optical signal through the first board, and transmitting the target optical signal to the third board through the optical connecting module based on an optical cross-connect configuration;
receiving, through the third board, the target optical signal sent by the first board, and transmitting the target optical signal to the second board through the optical connecting module based on the optical cross-connect configuration; and
receiving, through the second board, the target optical signal sent by the third board, and sending the target optical signal in a direction of a line side.

10. The method according to claim 9, wherein the optical cross-connect device further comprises a fourth board, the fourth board is connected to the optical connecting module, and the method further comprises:
receiving, if the working path is unavailable and an optical path between the first board and the third board is also unavailable, the target optical signal through the first board, and transmitting the target optical signal to the fourth board through the optical connecting module based on the optical cross-connect configuration;
receiving, through the fourth board, the target optical signal sent by the first board, and transmitting the target optical signal to the second board through the optical connecting module based on the optical cross-connect configuration; and
receiving, the target optical signal through the second board, and sending the target optical signal in the direction of the line side.
